# EUROPEAN PATENT APPLICATION

(11) **EP 4 285 714 A1**
(43) Date of publication of application: **06.12.2023**
(21) Application number: 23167224.7
(22) Date of filing: 10.04.2023
(51) Int. Cl.: A01G 20/47, A47L 5/14, E01H 1/08

(54) **BACKPACK BLOWER**

(30) Priority: 31.05.2022 CN 202210611533; 31.05.2022 CN 202210611730; 31.05.2022 CN 202210609159; 31.05.2022 CN 202221340096 U
(71) Applicant: Nanjing Chervon Industry Co., Ltd., Nanjing, Jiangsu 211106 (CN)
(72) Inventor: NIE, Zhusheng, Nanjing, Jiangsu, 211106 (CN); YAMAOKA, Toshinari, Nanjing, Jiangsu, 211106 (CN); ZHANG, Wenfei, Nanjing, Jiangsu, 211106 (CN); LI, Jingwei, Nanjing, Jiangsu, 211106 (CN)
(74) Representative: Sun, Yiming

(57) **Abstract**

A backpack blower includes a blower device, a power supply (2), and a backpack device (3). The backpack device (3) includes a device body (31) and a strap assembly (32). The strap assembly (32) is worn by a user. The strap assembly (32) has a first center plane (P), and the center of gravity (O) of the power supply (2) and the blower device (1) are separately located on two sides of the first center plane (P).

## Description

This application claims priority to Chinese Patent Application No. CN 202210611533.8, filed on May 31, 2022, Chinese Patent Application No. CN 202210611730.X, filed on May 31, 2022, Chinese Patent Application No. CN 202210609159.8, filed on May 31, 2022, and Chinese Patent Application No. CN 202221340096.2 filed on May 31, 2022, the disclosures of which are incorporated herein by reference in its entirety.

### TECHNICAL FIELD

The present disclosure relates to the technical field of power tools and, in particular, to a backpack blower and a backpack tool system.

### BACKGROUND

A backpack blower is a power tool widely applied to garden cleaning, snow blowing, and other operations and is widely applied due to portability. The backpack blower generally includes a backpack device, a power supply device, and a blower device. The backpack device is used for a user to wear. The power supply device is fixed behind the backpack device. The blower device is connected to the backpack device and extends from a side of the backpack device to the front of the user.

In the related art, a battery pack, as a power source of a backpack blower, has always been the major link that restricts the development of a portable power tool. A conventional battery pack has a relatively low output voltage and often has a problem of power insufficiency and power endurance when driving a power tool with high power. When the output voltage of the battery pack is increased by increasing the number of cells, the outer dimension and weight of the battery pack are correspondingly increased.

### SUMMARY

An objective of the present application is to provide a backpack blower and a backpack tool system.

To achieve the preceding object, the present application adopts the technical solutions described below.

A backpack blower includes a blower device including a motor, a fan, and a duct assembly, where the motor drives the fan to rotate and generate an airflow, and the duct assembly includes an duct guiding the airflow generated by the fan; a power supply for supplying electrical energy; and a backpack device including a device body, a strap assembly, and a power supply connection assembly, where both the strap assembly and the power supply connection assembly are formed on or connected to the device body, the strap assembly is worn by a user, and the power supply connection assembly enables the power supply to be detachably coupled to the backpack device. The strap assembly has a first center plane, and the center of gravity of the power supply and the blower device are separately located on two sides of the first center plane.

In some examples, the power supply includes at least two battery packs.

In some examples, the power supply includes a battery pack, and the power supply connection assembly includes a coupling portion connected to the device body and electrically connected to the battery pack and a guide portion for guiding the battery pack to be coupled to the coupling portion along a plugging direction.

In some examples, the coupling portion includes a first coupling portion and a second coupling portion, where the first coupling portion and the second coupling portion are separately coupled to battery packs, and the first coupling portion and the second coupling portion are disposed as mirror images about a second center plane.

In some examples, the plugging direction is parallel to a vertical direction.

In some examples, an included angle between the plugging direction and a vertical direction is an acute angle.

In some examples, the battery pack has a length direction, a width direction, and a height direction, a dimension of the battery pack in the length direction is greater than a dimension of the battery pack in the width direction, the dimension of the battery pack in the width direction is greater than a dimension of the battery pack in the height direction, and a side surface formed by the length direction and the width direction of the battery pack is parallel to a back of the user.

In some examples, a rotational speed of the fan is greater than or equal to 25000 RPM, and an air output of the duct assembly is greater than or equal to 720 CFM.

In some examples, the strap assembly includes multiple straps symmetrical about the first center plane, and each of the multiple straps includes a first end connected to an upper portion of the device body and a second end connected to a lower portion of the device body.

In some examples, an included angle α between a projection of a line between the first end and the second end on the first center plane and a projection of a line between the center of gravity of a whole formed by the power supply and the backpack device and the first end on the first center plane is greater than or equal to 5 degrees and less than or equal to 45 degrees.

In some examples, when the weight of a whole formed by the power supply and the backpack device is greater than or equal to 10 kg, the length of a projection of a line between the first end and the second end on the first center plane is greater than or equal to 400 millimeter.

In some examples, the whole formed by the power supply and the backpack device has the center of gravity, and the ratio of the length of a projection of a line between the center of gravity and the first end on the first center plane to the length of a projection of a line between the center of gravity and the second end on the first center plane is greater than or equal to 1.

In some examples, the strap assembly includes two straps symmetrical about the first center plane, and each of the two straps is slidably connected to the device body along a direction perpendicular to the first center plane.

In some examples, the strap assembly further includes a back pad for fitting a back of the user, and the back pad is slidably connected to the device body along a vertical direction.

In some examples, the backpack device further includes a control board, the device body is formed with a first cavity, the control board is disposed within the first cavity, the duct assembly is provided with a first connection hole between an air inlet and an air outlet, an air inlet hole is disposed on a side of the first cavity facing away from the blower device, a second connection hole is disposed on a side of the first cavity facing the blower device, and the second connection hole communicates with the first connection hole.

A backpack blower includes a blower device including a motor, a fan, and a duct assembly, where the motor drives the fan to rotate and generate an airflow, and the duct assembly includes an air outlet out of which the airflow flows; a power supply for supplying electrical energy; and a backpack device including a device body, a strap assembly, and a power supply connection assembly, where both the strap assembly and the power supply connection assembly are formed on or connected to the device body, the strap assembly is worn by a user, and the power supply connection assembly enables the power supply to be detachably coupled to the backpack device. The strap assembly has a first center plane, and the center of gravity of the power supply and the air outlet of the blower device are separately located on two sides of the first center plane.

A backpack tool system includes a power tool for a user to operate; a power supply for supplying electrical energy; and a backpack device including a device body, a strap assembly, and a power supply connection assembly, where both the strap assembly and the power supply connection assembly are formed on or connected to the device body, the strap assembly is worn by a user, and the power supply connection assembly enables the power supply to be detachably coupled to the backpack device. The strap assembly has a first center plane, the strap assembly includes multiple straps symmetrical about the first center plane, each of the multiple straps includes a first end connected to an upper portion of the device body and a second end connected to a lower portion of the device body, and an included angle α between a projection of a line between the first end and the second end on the first center plane and a projection of a line between the center of gravity of a whole formed by the power supply and the backpack device and the first end on the first center plane is greater than or equal to 5 degrees and less than or equal to 45 degrees.

In some examples, the strap assembly has the first center plane, and the center of gravity of the power supply and the power tool are separately located on two sides of the first center plane.

In some examples, when the weight of the whole formed by the power supply and the backpack device is greater than or equal to 10 kg, the length of the projection of the line between the first end and the second end on the first center plane is greater than or equal to 400 millimeter.

In some examples, the whole formed by the power supply and the backpack device has the center of gravity, and the ratio of the length of the projection of the line between the center of gravity and the first end on the first center plane to the length of a projection of a line between the center of gravity and the second end on the first center plane is greater than or equal to 1.

### BRIEF DESCRIPTION OF DRAWINGS

FIG. 1 is a structural view of a backpack blower according to a specific example of the present application;
FIG. 2 is a front view of a backpack blower according to a specific example of the present application;
FIG. 3 is a schematic view of a blower device and a connection structure according to a specific example of the present application;
FIG. 4 is a sectional view of FIG. 3 taken along A-A;
FIG. 5 is an exploded view of a blower device and a connection structure according to a specific example of the present application;
FIG. 6 is an enlarged view at C in FIG. 4;
FIG. 7 is a side view of a backpack blower according to a specific example of the present application;
FIG. 8 is an exploded view of a backpack device according to a specific example of the present application;
FIG. 9 is a schematic view illustrating a state in which a backpack device and a power supply device are separated according to a specific example of the present application;
FIG. 10 is a top view of a backpack blower according to a specific example of the present application;
FIG. 11 is a sectional view of FIG. 10 taken along B-B;
FIG. 12 is a schematic view of a backpack blower with a housing of part of a device body removed according to a specific example of the present application;
FIG. 13 is an exploded view of a clamping mechanism taken from one perspective according to a specific example of the present application; and
FIG. 14 is a schematic view of a clamping mechanism taken from another perspective according to a specific example of the present application.

### DETAILED DESCRIPTION

The present invention is further described hereinafter in detail in conjunction with drawings and examples. It is to be understood that the examples described herein are intended to explain the present invention and not to limit the present invention.

Additionally, it is to be noted that for ease of description, only part, not all, of the structures related to the present invention are illustrated in the drawings.

In the description of the present invention, unless otherwise expressly specified and limited, the term "connected to each other", "connected", or "secured" is to be construed in a broad sense, for example, as securely connected, detachably connected, or integrated; mechanically connected or electrically connected; directly connected to each other, indirectly connected to each other via an intermediary, internally connected between two components, or an interaction relation between two components. For those of ordinary skill in the art, specific meanings of the preceding terms in the present invention may be understood based on specific situations.

In the present invention, unless otherwise expressly specified and limited, when a first feature is described as "above" or "below" a second feature, the first feature and the second feature may be in direct contact or be in contact via another feature between the two features. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

In the description of this example, the orientation or position relationships indicated by terms "above", "below", "right", and the like are based on the orientation or position relationships shown in the drawings, merely for ease of description and simplifying an operation, these relationships do not indicate or imply that the referred device or element has a specific orientation and is constructed and operated in a specific orientation, and thus it is not to be construed as limiting the present invention. In addition, the terms "first" and "second" are used only to distinguish between descriptions and have no special meaning.

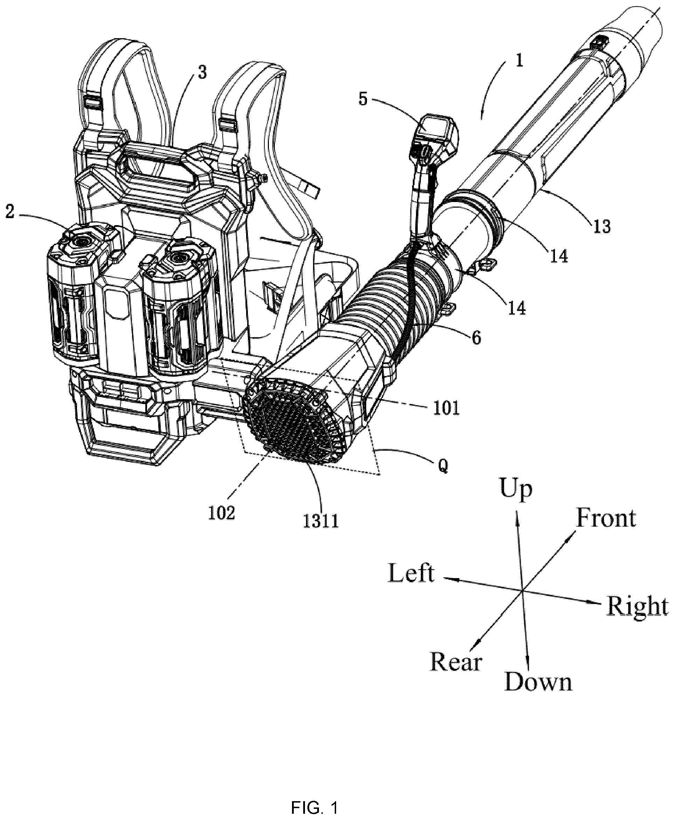

This example provides a backpack blower and a backpack tool system. As shown in FIGS. 1 to 3, the backpack tool system includes a backpack device 3, a power tool, and a power supply 2. The backpack device 3 is worn by a user, the power tool is connected to the backpack device 3 and may perform corresponding operations, and the power supply 2 is used for supplying electrical energy to the whole backpack tool system. In this example, the power tool is a blower device 1, and the case where the power tool is the blower device 1 is used as an example for the description below. In other examples, the power tool is not limited to the blower device 1 and may also be a mower, a grass trimmer, a hedge trimmer, a chain saw, and the like, which is not limited herein.

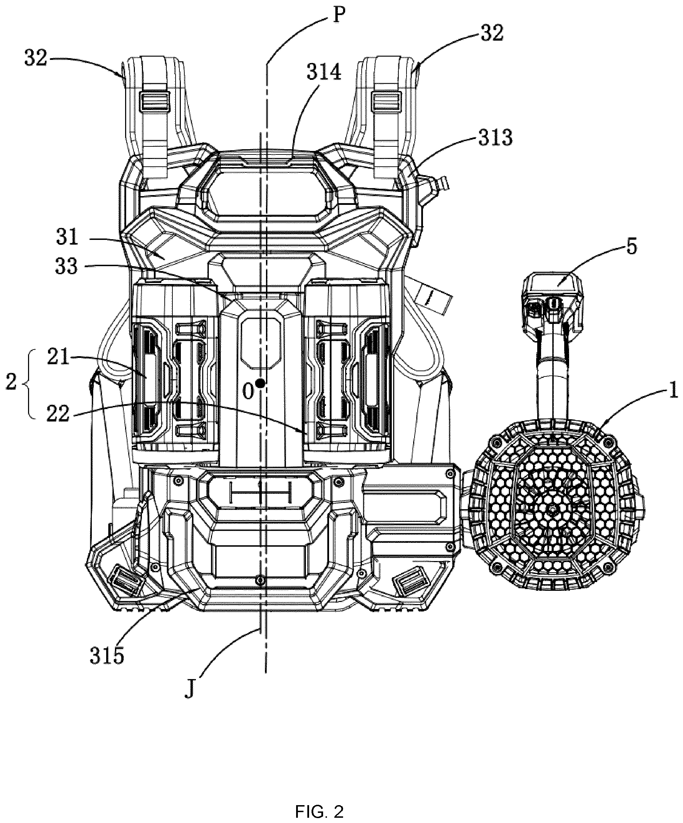

As shown in FIGS. 1 and 2, the backpack device 3 includes a device body 31, a strap assembly 32, and a power supply connection assembly 33. Both the strap assembly 32 and the power supply connection assembly 33 are formed on or connected to the device body 31. The strap assembly 32 is worn by the user. In this example, the strap assembly 32 is located on a side of the device body 31, and the user carries the backpack blower on the back through the strap assembly 32. The power supply connection assembly 33 is located on the other side of the device body 31. The power supply 2 is coupled to the backpack device 3 through the power supply connection assembly 33. It is to be noted that the term "coupling" herein includes a mechanical connection between the power supply 2 and the device body 31 and further includes an electrical connection between the power supply 2 and a power element/a control element inside the backpack blower.

As shown in FIG. 2, in this example, the power supply 2 includes two battery packs 21 and 22. Each battery pack mates with a corresponding power supply circuit to supply power to the power element/the control element inside the backpack blower. The two battery packs 21 and 22 can store more electrical energy, thereby increasing the lifetime of the whole backpack blower. For ease of description, the two battery packs are separately a first battery pack 21 and a second battery pack 22. Of course, in other examples, only one battery pack 21 may be provided as required, or three or four battery packs may be provided as required, and the specific number of the battery packs does not affect the essence of the present application.

The battery pack 21 may be a lithium battery pack, a solid-state battery pack, or a pouch battery pack. In some examples, a nominal voltage of the battery pack is 24 V, 36 V, 48 V, 56 V, or 80 V. In this example, the first battery pack 21 and the second battery pack 22 have the same nominal voltage.

As shown in FIGS. 1 and 2, the blower device 1 is connected to a side of the device body 31 and extends to the front of the user, and the blower device 1 is used for generating a concentrated and high-speed airflow. As shown in FIGS. 1, 3, and 4, the blower device 1 includes a duct assembly 13, a motor 11, and a fan 12. In this example, the motor 11 is specifically configured to be an electric motor, and the motor is replaced with an electric motor 11 in the following, but this is not construed as a limitation to the present application.

The whole duct assembly 13 has a cylindrical structure. An end of the duct assembly 13 is connected to the device body 31, and the other end of the duct assembly 13 extends to the front of the user. An air inlet 1311 is disposed at a rear end of the duct assembly 13, and an air outlet 1321 is disposed at a front end of the duct assembly 13.

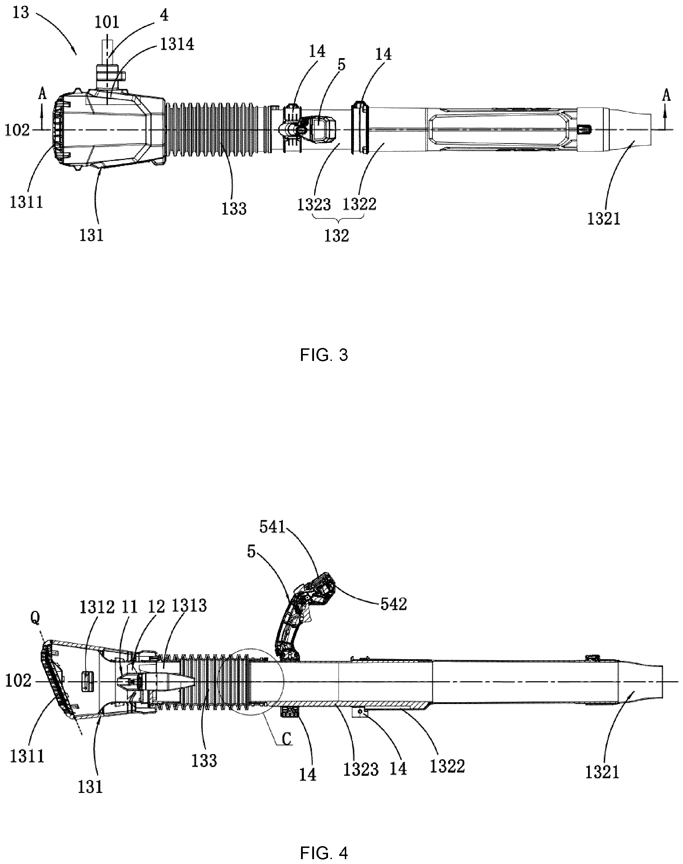

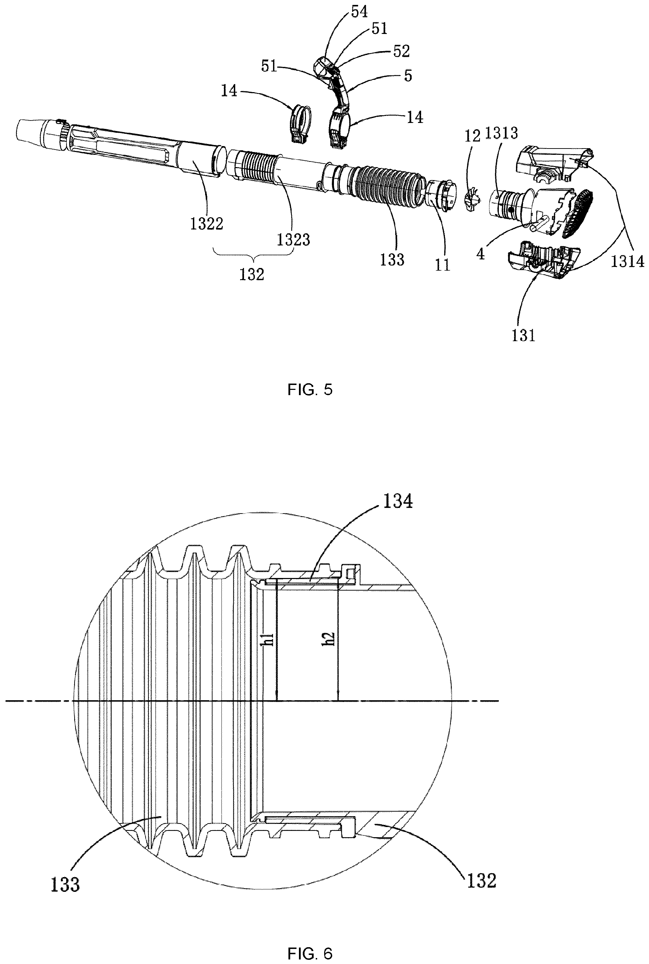

The electric motor 11 and the fan 12 are disposed within the duct assembly 13. As shown in FIGS. 4 and 5, a space for the airflow to pass through is formed at a position corresponding to the electric motor 11 and the fan 12 in the duct assembly 13 and referred to as a duct 1313. The power supply 2 supplies power to the electric motor 11 so that the electric motor 11 drives the fan 12 to rotate. When the fan 12 rotates, a negative pressure is generated on a side of the fan 12 facing the air inlet 1311 so that an external airflow can enter the duct 1313 from the air inlet 1311. After passing through the fan 12, the airflow becomes a high-speed airflow, and the high-speed airflow is guided by the duct assembly 13 and discharged from the air outlet 1321. In this example, a rotational speed of the fan is greater than or equal to 25000 RPM. In some examples, the rotational speed of the fan is greater than or equal to 26000 RPM.

As shown in FIG. 1 and FIGS. 3 to 5, the backpack device 3 further includes a connection structure 4, and the connection structure 4 connects the duct assembly 13 to the device body 31. The connection structure 4 has a first axis 101. An end of the connection structure 4 along the first axis 101 is rotatably connected to the device body 31, and the other end of the connection structure 4 along the first axis 101 is connected to the duct assembly 13 so that the blower device 1 can rotate relative to the backpack device 3 about the first axis 101, and the user can conveniently adjust the air outlet 1321 of the duct assembly 13 to different directions, thereby increasing the use flexibility of the blower device 1. As shown in FIGS. 3 and 5, the connection structure 4 is a shaft-like part and has a hollow channel, and connection lines (including a power supply line, a signal line, and the like) between the blower device 1 and the power supply 2/between the blower device 1 and the structure inside the backpack device 3 may penetrate through the hollow channel so that the aesthetics of the backpack blower is improved. In this example, the connection structure 4 has a certain length in a direction of the first axis 101 so that the positional interference between the blower device 1 and the backpack device 3 is avoided. A specific length value of the connection structure 4 along the direction of the first axis 101 may be selected and set as required, which is not limited herein.

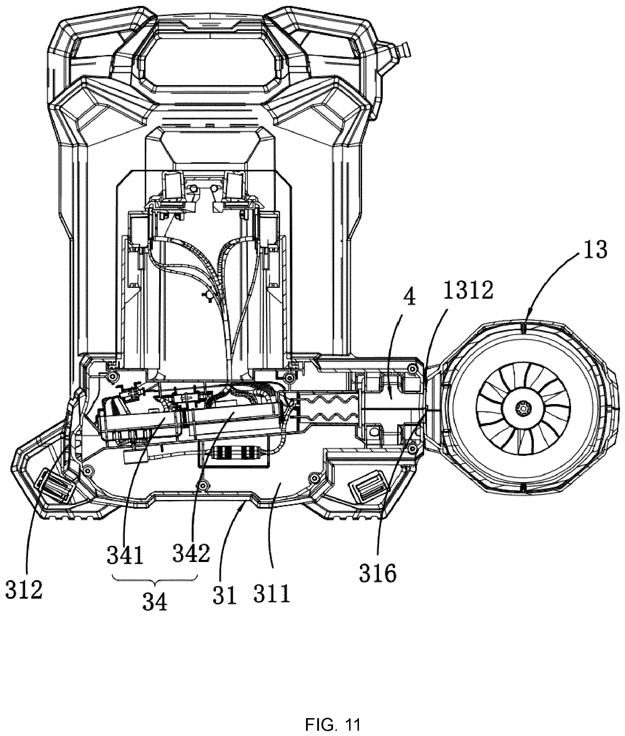

In this example, as shown in FIG. 11, a first cavity 311 is disposed in the device body 31. As shown in FIGS. 3 to 5, the duct assembly 13 includes an air inlet pipe 131. An air inlet pipe housing 1314 is disposed at an outer circumference of the air inlet pipe 131, and part of the air inlet pipe housing 1314 extends along the first axis 101 and wraps an outer circumference of the connection structure 4, where the part of the air inlet pipe housing 1314 wrapping the outer circumference of the connection structure 4 is located in the first cavity.

As shown in FIGS. 1 and 4, the duct 1313 has a duct axis 102, where the first axis 101 and the duct axis 102 can intersect in a same horizontal plane. In this manner, the relative position between the blower device 1 and the backpack device 3 is not changed, and a comfortable operating position for the user is ensured. Under this premise, the height of the first axis 101 is increased so that when the backpack blower is not used and the duct assembly 13 is rotated to a vertical direction for storage, the distance between a rotation axis of the duct assembly 13, that is, the first axis 101, and the ground is increased. Therefore, on the premise that the end of the duct assembly 13 at which the air inlet 1311 is disposed does not interfere with the ground, the total length between the air inlet 1311 of the duct assembly 13 and the fan 12 is increased, an included angle is formed between an air inlet plane Q where the air inlet 1311 is located and the duct axis 102, and an inclination angle of the air inlet plane Q is increased (as shown in FIG. 4), thereby increasing the total area of the air inlet 1311 and further improving the intake air volume of the duct assembly 13.

In this example, the duct axis 102 of the duct 1313 coincides with an axis of the electric motor 11 so that the smoothness of the whole electric motor 11 in operation is better.

Due to the increase of the number of battery packs and/or stored energy, the weight of the whole power supply 2 is increased, resulting in the poor stability of the backpack blower when the blower device 1 is in operation, causing the poor carrying experience of the user.

As shown in FIG. 2, the strap assembly 32 has a first center plane P, where the first center plane P is a perpendicular bisector of a line segment between a left end and a right end of the strap assembly 32, that is, the strap assembly 32 is symmetrically disposed as mirror images about the first center plane P. In this example, the center of gravity O of the power supply 2 and the blower device 1 are separately located on two sides of the first center plane P so that when the blower device 1 is in a working state, the weight of the power supply 2 may balance the torque generated by the electric motor 11, the fan 12, and other components of the blower device 1, thereby improving the balance of the whole backpack blower and further improving the user experience. In this example, as shown in FIG. 2, the center of gravity O of the power supply 2 is located on a left side of the first center plane P, and the blower device 1 is located on a right side of the first center plane P. It is to be explained that, in this example, the center of gravity O of the power supply 2 is the center of gravity of a whole of the first battery pack 21 and the second battery pack 22 after the first battery pack 21 and the second battery pack 22 are mounted to the power supply connection assembly 33. In this example, the center of gravity O of the power supply 2 is located basically in a plane of symmetry of the first battery pack 21 and the second battery pack 22 and may be understood as the center between the first battery pack 21 and the second battery pack 22.

Due to the increase of the number of battery packs and/or stored energy, the weight of the whole power supply 2 is increased, and the improper arrangement between various devices of the backpack blower leads to a large load-bearing feeling of the user and a poor user experience.

In some examples, as shown in FIGS. 2, 7, and 8, the strap assembly 32 includes two straps 321, and the two straps 321 are symmetrical about the first center plane P. Each strap 321 includes a first end 3211 connected to an upper portion of the device body 31 and a second end 3212 connected to a lower portion of the device body 31. An included angle α between a projection of a line between the first end 3211 and the second end 3212 on the first center plane P, that is, a line AB, and a projection of a line between the center of gravity O of a whole formed by the power supply 2 and the backpack device 3 and the first end 3211 on the first center plane P, that is, a line OA, satisfies the relationship of 5° ≤ α ≤ 45°.

A shoulder support point A of the whole backpack tool system is formed at the first end 3211 of the strap 321, and a waist support point B of the whole backpack tool system is formed at the second end 3212 of the strap 321. A projection of the center of gravity O of the whole formed by the power supply 2 and the backpack device 3 on the first center plane P, a projection of the shoulder support point A on the first center plane P, and a projection of the waist support point B on the first center plane P form a triangle. The included angle between the projection of the line between the first end 3211 and the second end 3212 of the strap 321 on the first center plane P and the projection of the line between the center of gravity of the whole formed by the power supply 2 and the backpack device 3 and the first end 3211 on the first center plane P is controlled to be in a range of 5 degrees to 45 degrees so that the angle at the top in the triangle is relatively small, that is, the center of gravity O is in a state of being closer to the back of a human body. In this case, the distribution of the acting force and the compression force of the whole backpack tool system applied to the human body makes the human body feel less load-bearing, thereby improving the user experience.

Specifically, α may be 5 degrees, 10 degrees, 30 degrees, 45 degrees, and the like and may be selected and set according to actual requirements, which is not limited herein.

In this example, when the power supply 2 includes two or more battery packs, the weight of the whole formed by the power supply 2 and the backpack device 3 is greater than or equal to 10 kg. In this case, the length (that is, the length of the line segment AB) of the projection of the line between the first end 3211 and the second end 3212 on the first center plane P is greater than or equal to 400 millimeter.

When the backpack blower with multiple battery packs is used by an ordinary user, the user easily feels more load-bearing when carrying the weight of 10 kg. In this example, the length of the line segment AB is controlled to be within a range of not less than 400 millimeter so that the angle (that is, α) at the top of the triangle may be made relatively small. In this manner, the center of gravity O is in the state of being closer to the back of the human body, and the whole formed by the power supply 2 and the backpack device 3 is not prone to toppling backward, thereby reducing the compression force generated by the whole backpack tool system and felt by the user and improving the user experience.

In this example, the ratio of the length (that is, the length of the line segment OA) of the projection of the line between the center of gravity O of the whole formed by the power supply 2 and the backpack device 3 and the first end 3211 on the first center plane P to the length (that is, the length of the line segment OB) of the projection of the line between the center of gravity O and the second end 3212 on the first center plane P is greater than or equal to 1. Similarly, in the case where the length of the line segment OB is constant, when the length of the line segment OA is greater, the center of gravity O is closer to the bottom. When carried, the whole formed by the power supply 2 and the backpack device 3 is not prone to toppling backward, and the backward-acting force applied to the shoulder is smaller. It is to be understood that, in an actual design, the ratio of the length of the line segment OA to the length of the line segment OB is larger, which is more conducive to reducing the load-bearing feeling of the user. Optionally, the ratio may be 1, 1.2, 1.4, 1.6, 1.8, 2, 3, and the like, which is not specifically limited herein.

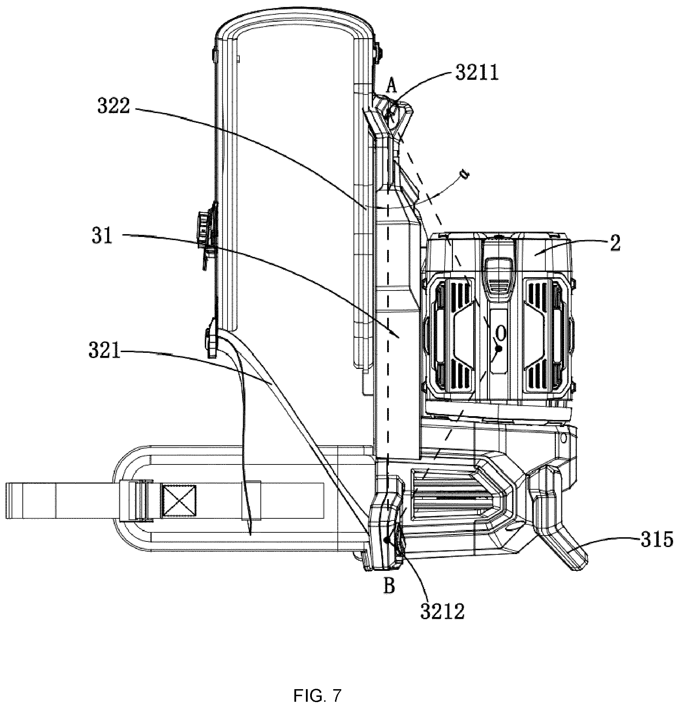

As shown in FIG. 7, the backpack device 3 further includes a waistband 35 connected to the device body 31. After the user wears the strap assembly 32, the waistband 35 may be disposed around the waist of the user, preventing the backpack blower from shaking during use.

In this example, as shown in FIGS. 2, 7 and 9, the first battery pack 21 and the second battery pack 22 are basically the same in structure and dimension. For ease of description of structural features, the first battery pack 21 is used as an example for description. The first battery pack 21 has a substantially cuboid structure, that is, the first battery pack 21 has a length direction L, a width direction W, and a height direction H, a dimension of the first battery pack 21 in the length direction is greater than a dimension of the first battery pack 21 in the width direction, and the dimension of the first battery pack 21 in the width direction is greater than a dimension of the first battery pack 21 in the height direction. In this example, to make the whole backpack device 3 more compact and aesthetic, a side surface formed by the length direction and the height direction of the first battery pack 21 is parallel to the back of the user. In other alternative examples, a side surface with a maximum surface area of the first battery pack 21 (that is, a side surface formed by the length direction and the width direction) is parallel to the back of the user so that the center of gravity of the battery is closer to the back of the human body, and in the case where the structure of the backpack device 3 is unchanged, the center of gravity O of the whole formed by the backpack device 3 and the power supply 2 is closer to the human body, and the corresponding α is smaller, which is conducive to reducing the load-bearing feeling of the human body.

As shown in FIG. 2, the straps 321 are slidably connected to the device body 31 along a direction perpendicular to the first center plane P so that the width between the two straps 321 is adjustable, and the two straps 321 may be adjusted to the matched widths when users of different shoulder widths/body sizes use the backpack blower, thereby improving the carrying comfort. Specifically, in this example, as shown in FIG. 2, two support rings 313 symmetrical about the first center plane P are disposed at an upper end of the device body 31, and the first end 3211 of the strap 321 is sleeved on the support ring 313 on a corresponding side and slidable along the support ring 313 so that the spacing between the two straps 321 can be adjusted. It is to be understood that in other examples, a position adjustment manner of the straps 321 along the width direction is not limited thereto. It is to be explained that in this example, a position adjustment function of the straps 321 along the width direction is implemented by a customer according to the usage habit, and initial positions of the straps 321 are symmetrical about the first center plane P at the time of delivery of the backpack blower.

The length of the strap 321 is adjustable so that users of different heights/sizes can adjust positions of the strap 321 of the backpack blower to their comfortable positions. Specifically, the length of the strap 321 may be adjusted in any one of the manners in the existing art, which is not specifically limited herein.

In this example, as shown in FIG. 2, a main handle 314 and an auxiliary handle 315 are further disposed on the device body 31. Both the main handle 314 and the auxiliary handle 315 may be lifted and gripped by the user so as to conveniently transport the backpack blower when the user does not carry the backpack blower on the back. The main handle 314 is connected between the two support rings 313. In this case, the main handle 314 and the support rings 313 are mutually supported, thereby ensuring the structural strength of the device body 31. As shown in FIGS. 2 and 7, the auxiliary handle 315 is disposed on part of the device body 31 closer to a lower end of the device body 31 and includes a grip for holding. When the backpack blower is not in operation (for example, when the backpack blower is placed on the ground), the auxiliary handle 315 supports the device body 31 so that the whole backpack blower is placed more stably and prevented from toppling and being damaged.

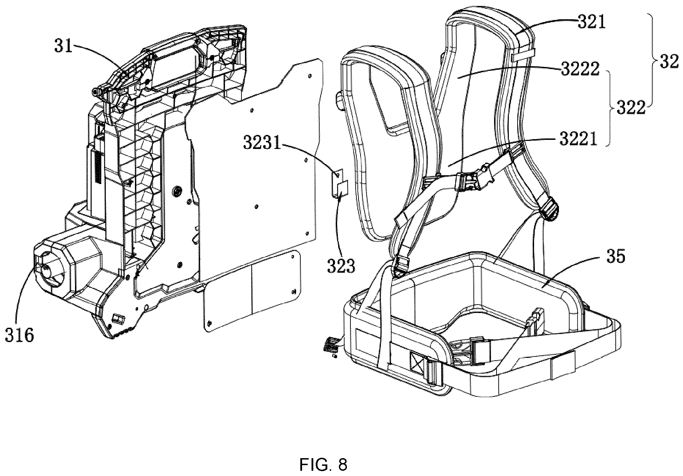

As shown in FIGS. 7 and 8, the strap assembly 32 further includes a back pad 322 for fitting the back of the user. The whole back pad 322 includes a main portion 3221 and two extension portions 3222 connected to an upper end of the main portion 3221. The whole back pad 322 is in a shape of "Y". The main portion 3221 of the back pad 322 is located between the device body 31 of the backpack device 3 and the back of the user. The two extension portions 3222 separately extend from two shoulders of the user to the front side of the user. Each strap 321 covers a side of one extension portion 3222 facing away from the human body. The back pad 322 can disperse the pressure applied by the straps 321/the device body 31 to the human body, thereby reducing the tightening feeling of the user. Preferably, the back pad 322 is made of a soft material having a certain thickness. Specifically, the back pad 322 may include a sponge or rubber.

The back pad 322 is slidably connected to the device body 31 along the vertical direction. That is, a position of the back pad 322 relative to the device body 31 in an up and down direction is adjusted so that the users of different heights/sizes may adjust the back pad 322 to positions suitable for themselves when using the back pad. As shown in FIG. 8, the back pad 322 is connected to a clip 323, where the clip 323 is provided with a long hole 3231 extending along the vertical direction. The backpack tool system further includes a threaded fastener (not shown), the device body 31 is provided with a threaded hole, the threaded fastener penetrates through the long hole 3231 and is threadedly connected to the threaded hole in the device body 31, and the threaded fastener is slidable in the long hole 3231 along the vertical direction. When the threaded fastener is located at different positions of the long hole 3231, the position of the back pad 322 relative to the device body 31 is adjusted up and down correspondingly. In other examples, the specific structure in which the back pad 322 is slidable along the device body 31 is not limited thereto.

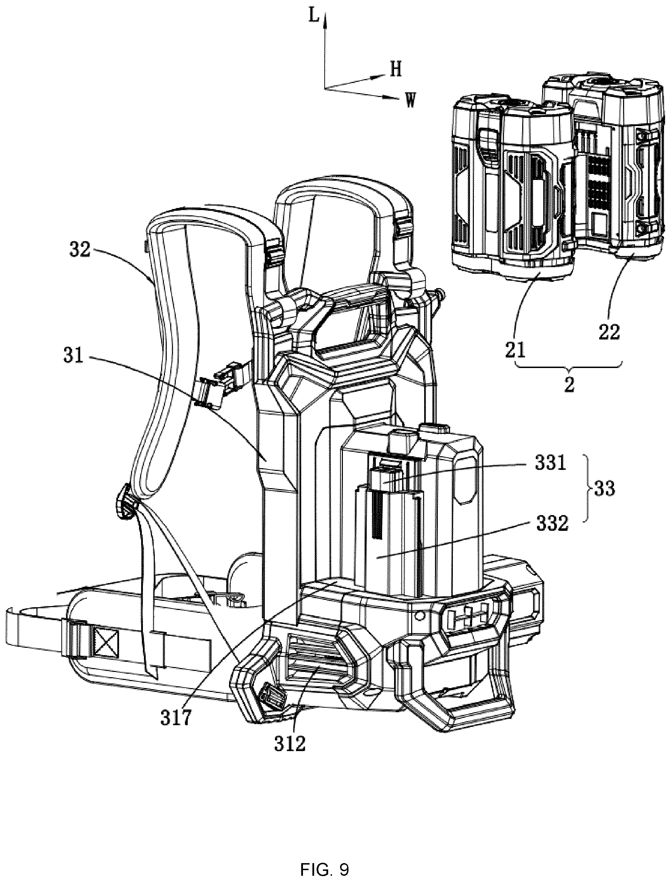

To achieve the detachable connection between the battery packs 21 and 22 and the power supply connection assembly 33, as shown in FIG. 9, the power supply connection assembly 33 includes a coupling portion 331 and a guide portion 332. The coupling portion 331 is connected to the device body 31 and used for connecting the battery pack 21, and the guide portion 332 is used for guiding the battery pack 21 to be coupled to the coupling portion 331 along a plugging direction. Specifically, in this example, the device body 31 is provided with a bearing portion 317, the coupling portion 331 may be positive and negative terminals disposed on the device body 31, the guide portion 332 may be a guide protrusion disposed on the device body 31 and extending along the plugging direction, and the battery pack 21 is provided with a guide chute. The first battery pack 21 is used as an example. When the first battery pack 21 is mounted, the guide chute on the first battery pack 21 mates with the guide protrusion, and then the first battery pack 21 slides along the guide protrusion and is placed on the bearing portion 317 of the device body 31. At this time, positive and negative posts on the first battery pack 21 just abut against the positive and negative terminals to achieve an electrical connection. The power supply connection assembly is provided so that the first battery pack 21 is convenient to disassemble and assemble.

In this example, the coupling portion 331 includes a first coupling portion and a second coupling portion that are disposed as mirror images about a second center plane J. The first coupling portion and the second coupling portion have basically the same structure. For ease of description of structural features, the coupling portion 331 here represents any one of the first coupling portion and the second coupling portion. Similarly, the guide portion 332 includes a first guide portion and a second guide portion that are disposed as mirror images about the second center plane J. The first guide portion and the second guide portion have basically the same structure. For ease of description of structural features, the guide portion 332 here represents any one of the first guide portion and the second guide portion. The guide portion 332 is used for guiding the first battery pack 21 to move along the plugging direction and be coupled to the coupling portion 331 on a corresponding side so that the first battery pack 21 is detachably connected to the backpack device 3.

In this example, as shown in FIGS. 2 and 9, plugging directions of the first battery pack 21 and the second battery pack 22 are parallel to the vertical direction, that is, the first battery pack 21 and the second battery pack 22 are plugged into the backpack device 3 from top to bottom so that the plugging process is more smooth under the action of gravity. In this example, the second center plane J is a vertical plane, and the second center plane J is parallel to the first center plane P and passes through the center of gravity O of the power supply 2.

In other alternative examples, an included angle between the plugging direction of the first battery pack 21 or the second battery pack 22 and the vertical direction is an acute angle (not shown in the figure), and an inlet of the plugging is in an inclined state. The plugging directions of the first battery pack 21 and the second battery pack 22 are parallel to each other so that the battery packs are convenient to replace when the user carries the backpack blower on the back. In this example, the second center plane J is parallel to the plugging directions.

The backpack blower further includes a control board 34. The control board 34 includes a power supply control board 342 and an electric motor control board 341, where the power supply control board 342 is used for controlling the power supply 2, and the electric motor control board 341 is used for controlling the electric motor 11.

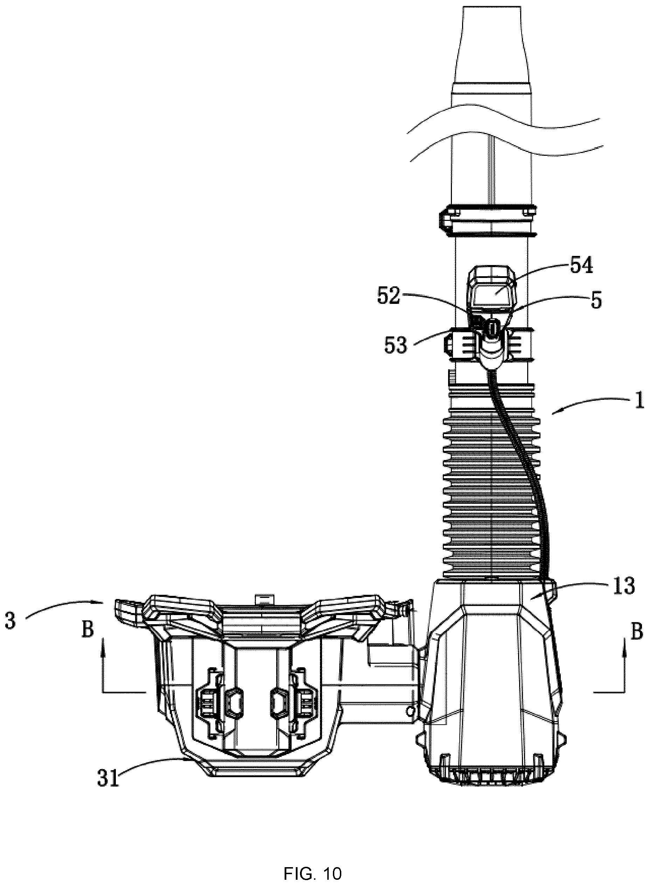

As shown in FIGS. 4 and 8 and FIGS. 10 to 12, the device body 31 is formed with the first cavity 311, and both the power supply control board 342 and the electric motor control board 341 are disposed within the first cavity 311. Both a connection line between the electric motor control board 341 and the electric motor 11 and a signal line between the electric motor control board 341 and a control board inside an operating handle 5 penetrate through the hollow channel of the connection structure 4 from the first cavity 311 and enter the duct assembly 13. An air inlet hole 312 is disposed on a side of the first cavity 311 facing away from the blower device 1, a second connection hole 316 is disposed on a side of the first cavity 311 facing the blower device 1, the duct assembly 13 is provided with a first connection hole 1312 between the air inlet 1311 and the fan 12, and the second connection hole 316 communicates with the first connection hole 1312.

In this example, the air inlet hole 312 and the second connection hole 316 are separately disposed at two ends of the first cavity 311. The air inlet hole 312 communicates with the atmosphere, the second connection hole 316 communicates with the first connection hole 1312 of the duct assembly 13, and a communication position between the first cavity 311 and the air duct (that is, the second connection hole 316 and the first connection hole 1312) is located upstream of the fan 12. When the electric motor 11 drives the fan 12 to rotate, a negative pressure is formed at an upstream position of the fan 12. In the negative pressure environment, external air may enter the upstream position of the fan 12 in two paths. In a first path, the external air enters the air duct through the air inlet 1311 of the duct assembly 13. In a second path, the external air enters from the air inlet hole 312 of the first cavity 311, flows through the first cavity 311, and then enters the air duct from the second connection hole 316. The air in the second path may dissipate heat of the control board 34 located within the first cavity 311 when flowing through the first cavity 311. Therefore, a fan and a drive source dedicated to the heat dissipation of the control board 34 do not need to be provided, thereby greatly reducing the costs of the backpack blower. In addition, the flow of the airflow flowing through the first cavity 311 is generated when the electric motor 11 drives the fan 12, that is, the heat dissipation of the control board 34 does not consume the electrical energy of the power supply 2, thereby increasing the lifetime of the blower device 1.

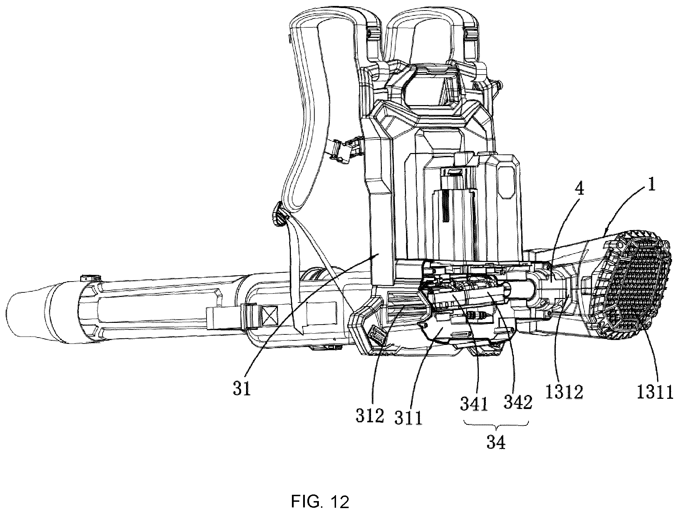

In actual use, a heat dissipation requirement of the electric motor control board 341 is higher than a heat dissipation requirement of the power supply control board 342. As shown in FIGS. 11 and 12, the electric motor control board 341 is disposed on a side of the power supply control board 342 facing the air inlet hole 312 so that the heat of the electric motor control board 341 is preferentially dissipated, so as to satisfy the heat dissipation requirement of the electric motor control board 341.

In this example, as shown in FIGS. 3 to 5, the duct assembly 13 includes the air inlet pipe 131, a flexible hose 133, and an air outlet pipe 132. The air inlet pipe 131, the hose 133, and the air outlet pipe 132 are connected and communicated in sequence. The air inlet pipe 131 is connected to the device body 31 through the connection structure 4, and both the electric motor 11 and the fan 12 are disposed in the air inlet pipe 131, that is, the duct 1313 is formed within the air inlet pipe 131. The air inlet 1311 is disposed at an end of the air inlet pipe 131 facing away from the hose 133, and the air outlet 1321 is disposed at an end of the air outlet pipe 132 facing away from the air inlet pipe 131. The flexible hose 133 is provided so that the adjustability of an extension direction of the air outlet pipe 132 is better, and an air outlet direction of the backpack blower can be adjusted more flexibly. In this example, the air outlet 1321 is detachably connected to the end of the air outlet pipe 132. To gather the air volume and generate a larger air thrust, the air outlet 1321 is in a tapered shape, where an air output of an end of the air outlet 1321 with the largest area is greater than or equal to 720 CFM. In some examples, the air output of the end of the air outlet 1321 with the largest area is greater than or equal to 750 CFM.

As shown in FIGS. 4 and 6, the hose 133 and the air outlet pipe 132 are provided with an overlapping portion, and a bracket 134 is disposed between the hose 133 and the air outlet pipe 132. According to a sequence of an outer circumferential surface of the bracket 134 entering the hose, an end of the bracket 134 first entering the hose 133 is a front end and the other end of the bracket 134 last entering the hose 133 is a rear end. A vertical distance (that is, h1 in FIG. 6) between the front end of the bracket 134 and a central axis of the hose 133 does not exceed a vertical distance (that is, h2 in FIG. 6) between the rear end of the bracket 134 and the central axis of the hose 133. The bracket 134 is not clamped or engaged with the hose 133 so that the bracket 133 can enter the hose 134 more conveniently and smoothly. A clamp is used at the overlapping portion of the hose 133 and the air outlet pipe 132 to limit a relative motion between the hose 133 and the air outlet pipe 132.

In this example, as shown in FIGS. 1, 3, and 4, the air outlet pipe 132 includes a first unit pipe 1322 and a second unit pipe 1323, and an end of the first unit pipe 1322 is sleeved on an end of the second unit pipe 1323, and the first unit pipe 1322 and the second unit pipe 1323 are connected by a clamping mechanism 14. The clamping mechanism 14 includes a hoop body 141 and a locking assembly 142, where an end of the hoop body 141 along an axial direction is sleeved on and fixed to the first unit pipe 1322, the other end of the hoop body 141 along the axial direction is sleeved on the second unit pipe 1323, and the locking assembly 142 can selectively lock the hoop body 141 to the air outlet pipe 132. Specifically, when the locking assembly 142 releases the hoop body 141, the hoop body 141 and the first unit pipe 1322 can slide together relative to the second unit pipe 1323, thereby adjusting the length of part of the first unit pipe 1322 sleeved on the second unit pipe 1323, further adjusting the total length of the whole air outlet pipe 132, and satisfying different use requirements. When a relative position between the first unit pipe 1322 and the second unit pipe 1323 is adjusted, the locking assembly 142 locks the hoop body 141 to the second unit pipe 1323, thereby preventing a position of the first unit pipe 1322 from being moved arbitrarily.

In the existing art, a retaining member 1422 is generally a threaded member. When the length of the air outlet pipe 132 needs to be adjusted, the threaded member needs to be screwed and unscrewed by a tool, and the operation is very inconvenient.

To solve the preceding problem, as shown in FIGS. 1, 13, and 14, the locking assembly 142 includes an operating member 1421 and the retaining member 1422, where the operating member 1421 includes a first position and a second position. When the operating member 1421 is located at the first position, the operating member 1421 drives the retaining member 1422 to lock the hoop body 141 and the duct assembly 13. When the operating member 1421 is located at the second position, the hoop body 141 is slidable on the duct assembly 13. In this manner, the user may directly switch the position of the operating member 1421 to drive the locking assembly 142 to move so that without using a tool, the hoop body 141 is switched between a state in which the hoop body 141 is locked on the duct assembly 13 and a state in which the hoop body 141 is movable relative to the duct assembly 13, and the adjustment operation of the total length of the duct assembly 13 is convenient and flexible.

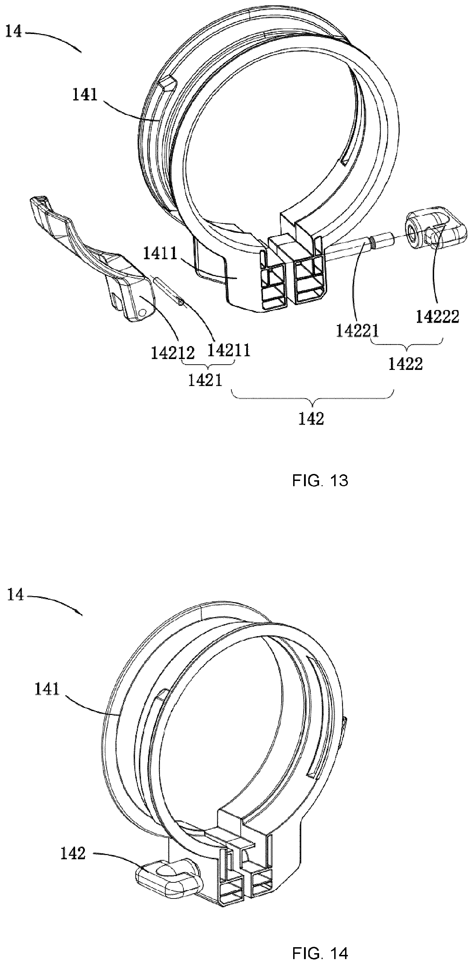

In this example, as shown in FIG. 13, the hoop body 141 has an annular structure with an opening, two ends of the hoop body 141 along a circumferential direction separately form connecting portions 1411, and the two connecting portions 1411 are opposite to each other and are separately provided with through holes. The retaining member 1422 includes a connecting shaft 14221 and a knob 14222, where the connecting shaft 14221 penetrates through the through holes on the two connecting portions 1411 in sequence, the knob 14222 is connected to an end of the connecting shaft 14221 and abuts against an outer side of one connecting portion 1411, and the knob 14222 can prevent the connecting shaft 14221 from falling out of the through holes. The operating member 1421 includes a fixing member, a pin shaft 14211, and a wrench 14212, where the fixing member is connected to an outer side of the other connecting portion 1411, the pin shaft 14211 is disposed on the fixing member, and the wrench 14212 is hinged to the fixing member through the pin shaft 14211 and connected to the other end of the connecting shaft 14221 so that when rotating, the wrench 14212 can drive the retaining member 1422 to axially press or release the two connecting portions 1411. The wrench 14212 has a dead center position (the dead center position represents that the wrench 14212 stops at this position when no external force is sufficiently large for driving the wrench 14212). In this example, when abutting against an outer wall of the hoop body 141, the wrench 14212 is at the dead center position, and when the wrench 14212 is at the dead center, the operating member 1421 is at the first position, that is, the locking assembly 142 locks the hoop body 141.

In a process of the user rotating the wrench 14212 to move toward the dead center position, the wrench 14212 pulls the connecting shaft 14221 and the knob 14222 together to gradually move along the axial direction, thereby tightly pressing the two connecting portions 1411 of the hoop body 141. When the wrench 14212 reaches the dead center position, a position between the hoop body 141 and the air outlet pipe 132 is locked. When the user rotates the wrench 14212 to move the wrench 14212 away from the dead center position, the connecting shaft 14221 and the knob 14222 move in reverse directions along the axial direction, thereby reducing the amount of pressing between the two connecting portions 1411 of the hoop body 141, and at this time, the hoop body 141 and the air outlet pipe 132 are unlocked.

As shown in FIGS. 13 and 14, the retaining member 1422 includes an adjusting portion, where the adjusting portion is used for adjusting the inner diameter of the hoop body 141 when the operating member 1421 is at the first position. That is, according to requirements, the adjusting portion can flexibly adjust the clamping degree of the air outlet pipe 132 by the clamping mechanism 14 so that the clamping mechanism 14 is used more flexibly, and the applicability is better for the air outlet pipe 132 whose diameter changes along the axial direction.

In this example, a threaded hole is disposed in the knob 14222, a threaded portion is disposed at an end of the connecting shaft 14221 connected to the knob 14222, the knob 14222 is threadedly connected to the connecting shaft 14221, and the threaded hole and the threaded portion constitute the adjusting portion. When the knob 14222 is rotated, the mating length of the connecting shaft 14221 and the knob 14222 is changed, and the total length of the connecting shaft 14221 penetrating through the connecting portions 1411 of the hoop body 141 is changed correspondingly, thereby adjusting the inner diameter of the hoop body 141.

As shown in FIGS. 1 and 3, the backpack blower further includes the operating handle 5 for the user to operate. An operating assembly is disposed on the operating handle 5 and electrically connected to the control board 34. After the user holds the operating handle 5, the user drives the operating handle 5 to move so that an extension direction of the duct assembly 13 is convenient to adjust, and an operation state of the electric motor 11 can be conveniently adjusted or switched by operating the operating assembly.

In this example, the operating handle 5 is connected to the air outlet pipe 132 by another clamping mechanism 14, the clamping mechanism 14 can be locked on the air outlet pipe 132 to lock a position of the operating handle 5, and the clamping mechanism 14 is selectively slidable on the air outlet pipe 132 to adjust the position of the operating handle 5 relative to the air outlet pipe 132. In this manner, users of different sizes can adjust the operating handle 5 to comfortable positions according to situations of the users so that the user experience is good.

It is to be noted that the clamping mechanism 14 connecting the air outlet pipe 132 to the operating handle 5 and the clamping mechanism 14 connecting the first unit pipe 1322 to the second unit pipe 1323 are two independent clamping mechanisms 14, but the two clamping mechanisms 14 have the same structure, the same working principle, and the same direction of use. The details are not repeated here.

Preferably, in this example, as shown in FIG. 1, the operating handle 5 is connected to a bellows 6, where the bellows 6 communicates with the air inlet pipe 131. The power supply line and the signal line in the operating handle 5 penetrate through the bellows 6, enter the air inlet pipe 131, and then enter the first cavity 311 of the device body 31 through the hollow channel of the connection structure 4 from the air inlet pipe 131 so that the connection to the control board 34 is achieved. In this manner, the winding or pulling between the lines can be avoided when the operating handle 5 moves on the air outlet pipe 132.

The operating handle 5 further includes a display assembly 54 for feeding back and displaying information. In this example, the display assembly includes a display 541 and a display controller 542. The display 541 is used for displaying, that is, the display 541 is used for providing feedback, that is, information prompting, to the user. The display 541 may be, for example, a liquid-crystal display (LCD) or a light-emitting diode (LED) display including an organic light-emitting diode (OLED) display or an organic electroluminescent (EL) display. A second controller is used for controlling the display 541. In some examples, the display assembly 54 further includes a state indicator light for prompting a working state of the backpack blower. The state indicator light is disposed on or connected to the second controller. The state indicator light is disposed on the display. The state indicator light includes, for example, an LED. In other alternative examples, the display assembly 54 further includes a voice prompt device for prompting the working state of the backpack blower. The voice prompt device includes, for example, a buzzer. It is to be understood that the state indicator light and the voice prompt device may be disposed integrally on the display 541 as a state prompt device.

In this example, display contents of the display 541 include, but are not limited to, power, remaining power, and remaining lifetime of the power supply 2. Since the power supply 2 includes two or more battery packs in this example, the display 541 displays the number of coupled battery packs and a coupling state of the battery packs and the power supply connection assembly 33, such as a coupling position. The display contents of the display 541 further include an operation state display of the power tool. Of course, it is to be understood that the display contents of the display 541 further include an operation state of the backpack blower in this example, where the operation state of the backpack blower includes a wind speed display, a mode display, and the like.

In this example, the operating assembly includes a trigger 51 for the user to control the starting and rotational speed of the electric motor 11. The operating assembly further includes a constant speed button 52 and an extreme speed button 53. The trigger 51, the constant speed button 52, and the extreme speed button 53 are all connected to the control board 34 and the display controller 542. When the trigger 51 is triggered by the user to be displaced, the trigger 51 sends an electrical signal to the control board 34 so as to adjust the rotational speed of the electric motor 11. When the constant speed button 52 is triggered, the constant speed button 52 sends an electrical signal to the control board 34 so as to lock the fan 12 to rotate at a current wind speed. When the extreme speed button 53 is triggered, an electrical signal is sent to the control board 34 so that the fan 12 is at a set maximum rotational speed, where the maximum rotational speed is greater than a maximum value of the rotational speed that can be locked by triggering the trigger 51. The trigger 51, the constant speed button 52, and the extreme speed button 53 are disposed on the operating handle 5, and the trigger 51 is disposed opposite to the constant speed button 52 and the extreme speed button 53 so that when handling the operating handle 5, the user may operate the trigger 51 with four fingers and operate the constant speed button 52 and the extreme speed button 53 with the thumb.

When the trigger 51 is triggered, the control board 34 controls the electric motor 11 to be started, and the rotational speed of the electric motor 11 is adjusted according to a trigger stroke of the trigger 51. In this example, the trigger 51 is coupled to a slide rheostat, and the slide rheostat outputs different analog signals when the trigger strokes of the trigger 51 are different. The trigger stroke of the trigger 51 is positively correlated with a duty cycle of a pulse-width modulation (PWM) signal of the electric motor 11, and the duty cycle of the PWM signal is positively correlated with the rotational speed of the electric motor 11. When the trigger stroke of the trigger 51 is relatively small, the duty cycle of the PWM signal is also relatively small, and at this time, the rotational speed of the electric motor 11 is also relatively small.

In some examples, the backpack blower stores a mapping relationship between the trigger stroke of the trigger 51 and the PWM signal, where the mapping relationship may be linear or non-linear, which is not limited in the examples of the present application.

When the constant speed button 52 is not triggered and the trigger 51 is released, the control board 34 controls the electric motor 11 to stop rotating. When the constant speed button 52 is not triggered, the control board 34 is configured to receive only a first type of signal. In some alternative examples, when the first type of signal (for example, a voltage signal) reaches a preset value, the control board 34 controls the electric motor 11 to be turned on. When the trigger 51 is no longer triggered, the control board 34 controls the electric motor 11 to stop rotating according to the change of the first type of signal.

When the constant speed button 52 is triggered, a second type of signal is sent to the control board 34, and the control board 34 locks a current rotational speed of the electric motor 11 according to the second type of signal.

When the user triggers the trigger 51 so that the electric motor 11 outputs a first rotational speed, the constant speed button 52 is triggered to activate the locking of the rotational speed of the electric motor 11. When the user triggers the trigger 51 to control the electric motor 11 to output the first rotational speed and the constant speed button 52 is triggered again, the constant speed button 52 generates the second type of signal to the control board 34, and the control board 34 controls the rotational speed of the electric motor 11 to be maintained at the first rotational speed according to the second type of signal. After the rotational speed of the electric motor 11 is locked by triggering the constant speed button 52, the trigger 51 is released and the control board 34 controls the electric motor 11 to rotate still at the first rotational speed. After the rotational speed of the electric motor 11 is locked through the constant speed button 52, when the user triggers the trigger 51 again, the control board 34 receives the first type of signal, and a speed corresponding to the position of the trigger 51 is set to be a second rotational speed. If the second rotational speed is less than the first rotational speed, the control board 34 controls the electric motor 11 to operate at the first rotational speed. If the second rotational speed is greater than the first rotational speed, the control board 34 controls the electric motor 11 to correspondingly raise a rotational speed of the fan 12 so that the fan 12 operates at the second rotational speed. After the user releases the trigger 51, the fan 12 still operates at the second rotational speed due to the limit of a rotational speed signal outputted from the constant speed button 52. A rotational speed locking state is released by triggering the constant speed button 52 again.

In this manner, the electric motor 11 can be adjusted to a preset maximum value of the locked rotational speed. An algorithm is provided in the control board 34 so that when the rotational speed of the electric motor 11 reaches the preset maximum value, the rotational speed of the electric motor 11 will not be increased when the user presses the button 51 again.

A third type of signal is sent to the control board 34 when the user triggers the extreme speed button 53. The control board 34 raises the rotational speed of the electric motor to the maximum rotational speed according to the third type of signal. The method and principle of the blower device entering an extreme speed mode are well known to those skilled in the art, so a detailed description is omitted herein for the purpose of the brevity of the description.

As an example, the constant speed button 52 and the extreme speed button 53 may be integrated into one component, and functions required for the constant speed button 52 and the extreme speed button 53 are implemented in different operating manners. The specific control principle is similar to that in the preceding examples, which is not described in detail here.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A backpack blower, comprising:
a blower device (1) comprising a motor (11), a fan (12), and a duct assembly (13), wherein the motor drives the fan to rotate and generate an airflow, and the duct assembly comprises an air duct guiding the airflow generated by the fan;
a power supply (2) for supplying electrical energy; and
a backpack device (3) comprising a device body (31), a strap assembly (32), and a power supply connection assembly (33), wherein both the strap assembly and the power supply connection assembly are formed on or connected to the device body, the strap assembly is worn by a user, and the power supply connection assembly enables the power supply to be detachably coupled to the backpack device;
wherein the strap assembly has a first center plane (P), and a center of gravity (O) of the power supply and the blower device are separately located on two sides of the first center plane.

2. The backpack blower of claim 1, wherein the power supply comprises at least two battery packs (21, 22).

3. The backpack blower of claim 1, wherein the power supply comprises a battery pack (21, 22), and the power supply connection assembly comprises:
a coupling portion (331) connected to the device body and electrically connected to the battery pack; and
a guide portion (332) for guiding the battery pack to be coupled to the coupling portion along a plugging direction.

4. The backpack blower of claim 3, wherein the coupling portion comprises a first coupling portion and a second coupling portion, wherein the first coupling portion and the second coupling portion are separately coupled to the battery pack, and the first coupling portion and the second coupling portion are disposed as mirror images about a second center plane (J).

5. The backpack blower of claim 3, wherein the plugging direction is parallel to a vertical direction.

6. The backpack blower of claim 3, wherein an included angle between the plugging direction and a vertical direction is an acute angle.

7. The backpack blower of claim 3, wherein the battery pack has a length direction (L), a width direction (W), and a height direction (H), a dimension of the battery pack in the length direction is greater than a dimension of the battery pack in the width direction, the dimension of the battery pack in the width direction is greater than a dimension of the battery pack in the height direction, and a side surface formed by the length direction and the width direction of the battery pack is parallel to a back of the user.

8. The backpack blower of claim 1, wherein a rotational speed of the fan is greater than or equal to 25000 RPM, and an air output of the duct assembly is greater than or equal to 720 CFM.

9. The backpack blower of claim 1, wherein the strap assembly comprises a plurality of straps symmetrical about the first center plane, and each of the plurality of straps comprises a first end (3211) connected to an upper portion of the device body and a second end (3212) connected to a lower portion of the device body.

10. The backpack blower of claim 9, wherein an included angle α between a projection of a line between the first end and the second end on the first center plane and a projection of a line between a center of gravity of a whole formed by the power supply and the backpack device and the first end on the first center plane is greater than or equal to 5 degrees and less than or equal to 45 degrees.

11. The backpack blower of claim 9, wherein when a weight of a whole formed by the power supply and the backpack device is greater than or equal to 10 kg, a length of a projection of a line between the first end and the second end on the first center plane is greater than or equal to 400 millimeter.

12. The backpack blower of claim 11, wherein the whole formed by the power supply and the backpack device has a center of gravity (O), and a ratio of a length of a projection of a line between the center of gravity and the first end on the first center plane to a length of a projection of a line between the center of gravity and the second end on the first center plane is greater than or equal to 1.

13. The backpack blower of claim 9, wherein the strap assembly comprises two straps symmetrical about the first center plane, and each of the two straps is slidably connected to the device body along a direction perpendicular to the first center plane.

14. The backpack blower of claim 13, wherein the strap assembly further comprises a back pad (322) for fitting a back of the user, and the back pad is slidably connected to the device body along a vertical direction.

15. The backpack blower of claim 1, wherein the backpack device further comprises a control board (34), the device body is formed with a first cavity (311), the control board is disposed within the first cavity, the duct assembly is provided with a first connection hole (1312) between an air inlet and an air outlet (1321), an air inlet hole (312) is disposed on a side of the first cavity facing away from the blower device, a second connection hole (316) is disposed on a side of the first cavity facing the blower device, and the second connection hole communicates with the first connection hole.
